# DEMANDE DE BREVET EUROPEEN

(11) **EP 2 000 024 A1**
(43) Date de publication de la demande: **10.12.2008**
(21) Numéro de dépôt: 08005975.1
(22) Date de dépôt: 28.03.2008
(51) Int. Cl.: A01K 61/00, A01K 80/00

(54) **Ensemble de culture et de récolte pour coquillages cultives sur des tables de culture**

(30) Priorité: 08.06.2007 FR 0704099
(71) Demandeur: PASCAL, 35350 Saint-Coulomb (FR)
(72) Inventeur: Boutrais, Pascal, 35350 Saint-Coulomb (FR)
(74) Mandataire: Maillet, Alain

(57) **Abrégé**

L'invention concerne un ensemble de culture et de récolte de coquillages, tels que des huîtres ou des moules, qui ne nécessite pas une importante main d'oeuvre et qui permette une récolte rapide et qualitative des coquillages.

L'ensemble (1) de culture et de récolte de coquillages selon l'invention comporte au moins une table de culture (300) et au moins une poche (100) qui est prévue pour contenir lesdits coquillages et pour être disposée sur ladite table de culture (300) et est caractérisé en ce que ladite poche (100) est composée d'au moins une pièce (101) dont les bords opposés (102, 103) sont joints par un moyen de liaison (104) de manière à former ladite poche (100), ledit moyen de liaison (104) pouvant être actionné de manière à déployer ladite poche (100), et en ce qu'il comporte, de plus, un moyen de récolte (200) prévu pour récolter lesdits coquillages contenus dans ladite poche (100) lorsque celle-ci est déployée.

L'ensemble selon l'invention permet ainsi la culture des coquillages dans une poche dont la conception permet une manipulation rapide et aisée de manière à l'ouvrir pour la récolte. La combinaison de ce moyen de culture avec un moyen de récolte permet d'éviter le ramassage manuel des coquillages et ainsi permet de gagner en temps de travail. Le travail est, en outre, rendu plus facile pour le producteur.

## Description

L'invention concerne un ensemble de production de coquillages, tels que des huîtres ou des moules.

Dans la présente demande, on entend par production des coquillages, la mise en culture, la culture et la récolte des coquillages.

La culture des moules est habituellement réalisée sur des pieux, dits bouchots, qui sont enfoncés dans le fond marin et sur lesquels sont enroulées des cordes supportant des naissains de moules. Des filets sont ensuite disposés par-dessus les naissains de manière à empêcher les coquillages de se détacher sous l'effet des vagues. Après un temps de croissance déterminé, les amas de moules sont récupérés et les moules sont dégrappées les unes des autres.

Un autre système de culture de moules consiste à cultiver les coquillages dans des casiers ou des poches fixés sur des tables, dont les pieds reposent sur le fond marin. Ce type de culture est dit culture en surélévation.

La culture des huîtres, quant à elle, débute par la fixation des larves d'huîtres sur des collecteurs. Après un temps de croissance déterminé, les naissains d'huîtres sont détachés des collecteurs et transférés dans des parcs. Dans ces parcs, les huîtres peuvent être élevées en surélévation sur des tables, en suspension sur des cordes ou cultivées à plat, à même le fond marin.

Dans le cas de la culture de coquillages sur table, la récolte s'effectue manuellement. Le ramassage nécessite une main d'oeuvre importante et capable de travailler dans des conditions très difficiles. En effet, le travail peut s'avérer très pénible du fait, notamment, des charges à porter, des conditions climatiques et de la distance à parcourir si l'on totalise le nombre de tables. Après plusieurs années d'activité, le personnel est souvent victime de douleurs articulaires. Le personnel est alors relativement difficile à recruter.

La présente invention a pour but de proposer un ensemble de production de coquillages, tels que des huîtres et des moules, qui facilite le travail du producteur et de son personnel en améliorant leurs conditions de travail, qui permette une récolte rapide et qualitative des coquillages à des coûts de main d'oeuvre moindre par kilogramme de coquillages produits.

A cet effet, un ensemble de production de coquillages, tels que des moules ou des huîtres, comporte au moins un moyen de culture composé d'au moins une table de culture et d'au moins une poche qui est prévue pour contenir lesdits coquillages et pour être disposée sur ladite table de culture.
L'ensemble est caractérisé en ce que ladite poche est composée d'au moins une pièce dont les bords opposés sont joints par un moyen de liaison de manière à former ladite poche, ledit moyen de liaison pouvant être actionné de manière à déployer ladite poche, et en ce qu'il comporte, de plus, un moyen de récolte prévu pour récolter lesdits coquillages contenus dans ladite poche lorsqu'elle est déployée.

L'ensemble, selon l'invention, permet ainsi la culture des coquillages dans une poche dont la conception permet une manipulation rapide et aisée de manière à l'ouvrir pour la récolte. La combinaison de ce moyen de culture avec un moyen de récolte permet d'éviter le ramassage manuel des coquillages et ainsi, permet de gagner en qualité de conditions de travail et en temps de travail.

Selon un mode de réalisation de l'invention, ledit moyen de liaison est composé d'au moins un crochet et d'au moins un élastique.

Avantageusement, ladite poche, lorsqu'elle est formée, est pourvue d'au moins un peigne comportant au moins une dent présentant un coude, ledit peigne étant disposé perpendiculairement au plan de ladite poche.

Selon une caractéristique de l'invention, ledit moyen de récolte (200) est prévu pour être déplacé dans une direction parallèle à l'axe longitudinal de ladite table et comporte au moins une brosse cylindrique, prévue pour être disposée sur ladite table, rotative autour de son axe longitudinal dans un sens tel que les points les plus bas sur ladite brosse se déplacent d'arrière en avant par rapport à ladite direction de déplacement de manière à provoquer un déplacement des coquillages, lequel axe forme un angle avec ladite direction de déplacement, et un moyen de réception pour coquillages disposé dans un plan inférieur au plan horizontal de ladite brosse en arrière de la partie la plus en arrière de ladite brosse par rapport à la direction et destiné à recevoir lesdits coquillages déplacés par ladite brosse.

Préférentiellement, ledit angle est tel que ladite brosse est apte à couvrir la totalité de la largeur de ladite table.

Encore plus préférentiellement, ledit angle est compris entre 90°et 45°.

Selon une caractéristique de l'invention, ladite brosse comprend plusieurs rangées de fibres implantées de façon hélicoïdale autour de son axe longitudinal, de manière à provoquer un déplacement des coquillages le long dudit axe longitudinal.

Selon un mode de réalisation de l'invention, ledit moyen de récolte comporte une seconde brosse qui est rotative autour de son axe longitudinal dans un sens tel que les points les plus bas sur ladite brosse se déplacent d'avant en arrière par rapport à ladite direction de déplacement dudit moyen de récolte et qui est disposée en avant de ladite première brosse cylindrique, parallèle à celle-ci et contre celle-ci de manière à ce que les fibres des brosses, respectivement, s'intercalent les unes dans les autres pour former un passage à l'intérieur duquel les coquillages sont entraînés lorsque lesdites brosses sont entraînées en rotation.

Avantageusement, ledit moyen de récolte comporte, dans ce mode de réalisation particulier de l'invention, une vis sans fin prévue pour acheminer les coquillages depuis ledit passage jusque dans ledit moyen de réception.

Avantageusement encore dans ce mode de réalisation, l'angle est égal à 90°.

Selon un mode de réalisation de l'invention, ledit moyen de réception est composé d'un tapis sans fin monté sur deux rouleaux entraînés en rotation par un moteur ainsi que d'un réceptacle, un bord dudit tapis sans fin étant disposé au dessus dudit réceptacle et l'autre bord dudit tapis étant disposé dans un plan inférieur au plan horizontal de ladite brosse.

Selon un mode de réalisation de l'invention, ledit moyen de récolte comporte, de plus, un moyen de protection dudit moyen de réception conformé en U et dont une branche est interposée entre ledit moyen de réception et ladite brosse et l'autre branche est disposée sous ledit moyen de réception.

Selon un mode de réalisation de l'invention, ledit moyen de récolte comporte en outre une seconde brosse cylindrique qui est rotative autour de son axe longitudinal dans un sens tel que les points les plus bas sur ladite brosse se déplacent d'avant en arrière par rapport à ladite direction de déplacement dudit moyen de récolte, de manière à provoquer un dégrappage des coquillages et qui est disposée en avant de ladite première brosse cylindrique.

Avantageusement, ledit moyen de récolte comporte une paroi de protection de ladite brosse cylindrique prévue pour empêcher les coquillages d'être entraînés par la rotation de la brosse au-dessus de celle-ci.

La présente invention concerne encore une poche de,culture pour coquillages, notamment pour huîtres et moules. Ladite poche de culture est composée d'au moins une pièce dont les bords opposés sont joints par un moyen de liaison (104), de manière à former ladite poche.

La présente invention concerne encore un moyen de récolte pour coquillages. Le dit moyen de récolte est prévu pour être déplacé dans une direction parallèle à l'axe longitudinal de ladite table et comporte au moins une brosse cylindrique, prévue pour être disposée sur ladite table, rotative autour de son axe longitudinal dans un sens tel que les points les plus bas sur ladite brosse se déplacent d'arrière en avant par rapport à ladite direction de déplacement de manière à provoquer un déplacement des coquillages, lequel axe forme un angle avec ladite direction de déplacement, et un moyen de réception pour coquillages disposé dans un plan inférieur au plan horizontal de ladite brosse en arrière de la partie la plus en arrière de ladite brosse par rapport à la direction et destiné à recevoir lesdits coquillages déplacés par ladite brosse.

Selon une caractéristique de l'invention, ledit angle est tel que ladite brosse est apte à couvrir la totalité de la largeur de ladite table.

Avantageusement, ledit angle est compris entre 45° et 90°.

Selon une caractéristique de l'invention, ladite brosse comprend plusieurs rangées de fibres, implantées de façon hélicoïdale autour de son axe longitudinal, de manière à provoquer un déplacement des coquillages le long dudit axe longitudinal.

Selon un mode de réalisation de l'invention, ledit moyen de récolte comporte, de plus, une brosse qui est rotative autour de son axe longitudinal dans un sens tel que les points les plus bas sur ladite brosse se déplacent d'avant en arrière par rapport à ladite direction de déplacement dudit moyen de récolte et qui est disposée en avant de ladite première brosse cylindrique, parallèle à celle-ci et contre celle-ci de manière à ce que les fibres des brosses, respectivement, s'intercalent les unes dans les autres pour former un passage à l'intérieur duquel les coquillages sont entraînés lorsque lesdites brosses sont entraînées en rotation.

Dans ce mode de réalisation, ledit moyen de récolte comporte une vis sans fin prévue pour acheminer les coquillages depuis ledit passage jusque dans ledit moyen de réception.

Dans ce même mode de réalisation, ledit angle est égal à 90°.

De façon avantageuse, ledit moyen de réception est composé d'un tapis sans fin monté sur deux rouleaux entraînés en rotation par un moteur ainsi que d'un réceptacle, un bord dudit tapis sans fin étant disposé au-dessus dudit réceptacle, et l'autre bord dudit tapis étant disposé dans un plan inférieur au plan horizontal de ladite brosse.

Ledit moyen de récolte peut comporter, de plus, un moyen de protection dudit moyen de réception conformé en U et dont une branche est interposée entre ledit moyen de réception et ladite brosse et l'autre branche est disposée sous ledit moyen de réception.

Selon un autre mode de réalisation de l'invention, ledit moyen de récolte comporte, en outre, une seconde brosse cylindrique qui est rotative autour de son axe longitudinal dans un sens tel que les points les plus bas sur ladite brosse se déplacent d'avant en arrière par rapport à ladite direction de déplacement dudit moyen de récolte, de manière à provoquer un dégrappage des coquillages et qui est disposée en avant de ladite première brosse cylindrique.

Selon ce même mode de réalisation de l'invention, ledit moyen de récolte comporte une paroi de protection de ladite brosse cylindrique prévue pour empêcher les coquillages d'être entraînés par la rotation de la brosse au-dessus de celle-ci.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente de façon schématique une vue du dessus d'un ensemble de production selon un premier mode de réalisation de l'invention,
La Fig. 2 représente de façon schématique une vue du dessus d'une poche et d'une table de culture d'un ensemble de production selon le premier mode de réalisation de l'invention, lorsque ladite poche n'est pas déployée,
La Fig. 3 est une vue de face, légèrement en biais d'une poche et d'une table de culture d'un ensemble de production selon le premier mode de réalisation de l'invention, lorsque ladite poche est déployée,
La Fig. 4 est une vue de face d'un ensemble de production selon un premier mode de réalisation de l'invention et,
La Fig. 5 représente de façon schématique une vue du dessus d'un ensemble de production selon un autre mode de réalisation de l'invention,
La Fig. 6 représente de façon schématique une vue du dessus et de biais d'un moyen de mise en culture d'un ensemble de production selon un autre mode de réalisation de l'invention,
Les Figs. 7a à 7c représentent de façon schématique un ensemble de production selon un autre mode de réalisation de l'invention,

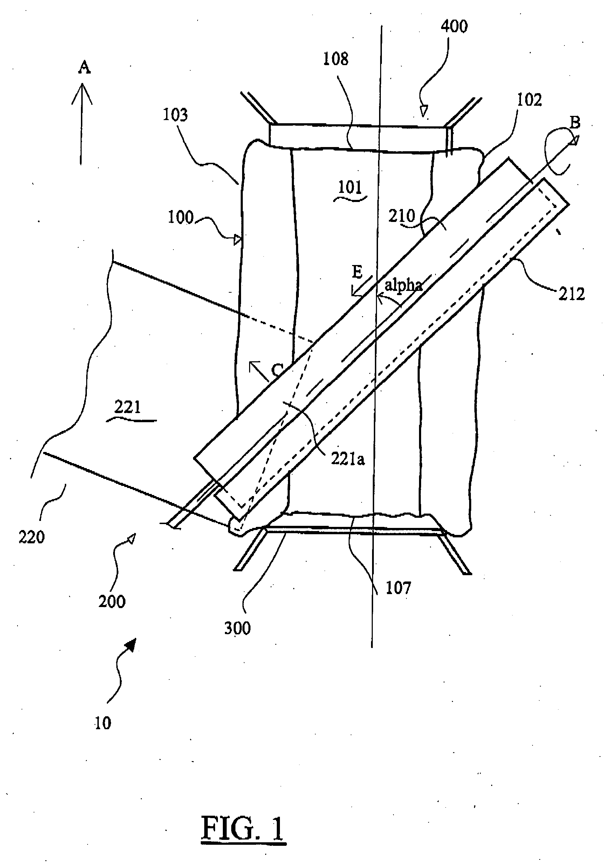

Sur la Fig. 1 est représenté schématiquement un ensemble 1 de production de coquillages selon un premier mode de réalisation de l'invention. Un tel ensemble 1 comporte un moyen de culture 400 qui est composé d'une poche de culture 100 fixée sur une table de culture 300, et un moyen de récolte 200.

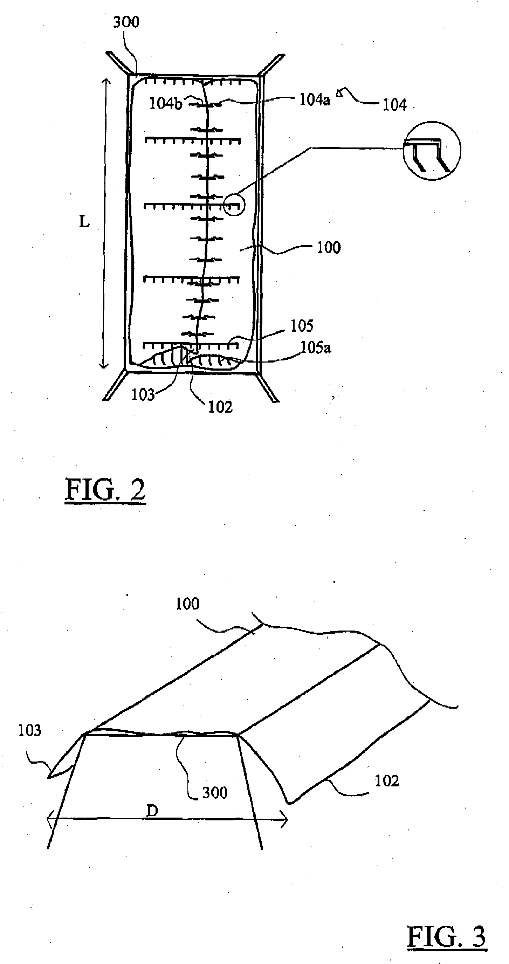

La poche de culture 100 est composée d'une seule pièce 101, plane, de forme rectangulaire ou carrée et dont les bords opposés 102 et 103 sont joints par un moyen de liaison 104 de manière à former ladite poche 100 telle que représentée sur la Fig. 2. De façon avantageuse, une seule poche de culture 100 est disposée sur la table de culture 300.

Le moyen de liaison 104 est également un moyen de fermeture et d'ouverture de la poche 100. Il est composé, par exemple, de crochets, tels que le crochet 104a, régulièrement espacés le long de la poche 100, et d'élastiques, tels que l'élastique 104b. Le moyen de fermeture et d'ouverture 104 peut être actionné de manière à déployer la poche 100 et à découvrir les coquillages pouvant y être contenus.

La pièce 101 peut être en matière plastique et est composée d'un réseau de mailles qui permet l'écoulement de flux d'eau entre l'intérieur et l'extérieur de la poche 100.

Des peignes, tels que le peigne 105, sont disposés régulièrement sur la totalité de la longueur L de la poche 100 et perpendiculairement au plan de la poche 100 de façon à diviser celle-ci en plusieurs compartiments, mais également de façon à fermer la poche 100 à ses extrémités (Fig. 2). Le peigne 105 possède des dents telles que la dent 105a qui comporte avantageusement un coude. Le peigne 105 est accessible depuis l'extérieur de la poche 100. Ses dents, par exemple la dent 105a, pénètrent dans la poche 100 au travers des mailles. Le peigne 105 permet d'éviter que les coquillages se déplacent à l'intérieur de la poche 100 en suivant le mouvement des vagues et s'entassent les uns sur les autres.

Une fois déployée, après une action sur le moyen de liaison 104, et comme représentée sur la Fig. 3, la poche de culture 100 présente des dimensions telles que la distance D entre les bords opposés 102 et 103 est supérieure à la largeur de la table 300.

L'ensemble 1 de production de coquillages comprend encore un moyen de récolte 200 représenté sur la Fig. 1. Le moyen de récolte 200 est prévu pour être déplacé dans une direction parallèle à l'axe longitudinal de la table de culture 300, comme indiqué par la flèche A et peut par exemple, à cet effet, être relié au châssis d'un véhicule motorisé, non représenté sur la Fig. 1.

Le moyen de récolte 200 comporte une brosse cylindrique 210. Cette dernière est prévue pour être placée sur la table 300 et venir balayer l'ensemble de la poche 100 lorsque celle-ci est déployée sur la table 300. La brosse 210 se déplace selon la direction A. L'axe longitudinal de la brosse 210 forme, avec la direction de déplacement A de ladite brosse 210, un angle α tel que la brosse 210 peut balayer la poche 100 sur toute sa largeur. Dans le mode de réalisation de l'invention, illustré sur la Fig. 1, l'angle α est égal à 45°.

La brosse 210 peut être entraînée en rotation autour de son axe longitudinal de telle façon que les points les plus bas sur la brosse 210 se déplacent d'arrière en avant par rapport à la direction de déplacement A de ladite brosse 210, c'est-à-dire, dans un sens antihoraire comme indiqué par la flèche B.

Lorsque le moyen de récolte 200 se déplace selon la direction représentée par la flèche A, la brosse 210 se déplace le long de la table 300, depuis le bord 107 de la poche 100 jusqu'au bord 108. La brosse, animée de son mouvement de rotation selon la flèche B, provoque le déplacement des coquillages dans une direction représentée par la flèche C. La brosse 210 comprend plusieurs rangées de fibres, implantées de façon hélicoïdale autour de son axe longitudinal. Les fibres permettent ainsi l'entraînement des coquillages le long de l'axe longitudinal de la brosse 210, en direction d'un moyen de réception 220, selon la flèche E. Il est à noter que l'implantation des fibres, de façon hélicoïdale, permet de déplacer les coquillages en direction du moyen de réception 220, même si l'axe de la brosse 210 forme un angle de 90° avec la direction A.

Une paroi de protection 212 de la brosse 210 permet d'empêcher les coquillages d'être entraînés par la rotation de la brosse 210 au-dessus de celle-ci.

Le moyen de récolte 200 comporte ainsi encore un moyen de réception 220 de coquillages. Le moyen de réception 220 est disposé dans un plan inférieur au plan horizontal de la brosse 210, en arrière de la partie la plus en arrière de la brosse 210 par rapport à la direction de déplacement A de celle-ci. Dans le mode de réalisation représenté sur la Fig. 1, le moyen de réception 220 est composé d'un tapis sans fin 221 monté sur deux rouleaux entraînés en rotation par un moteur non représenté et d'un réceptacle (non représenté). Un bord 221a du tapis 221 est disposé dans un plan inférieur au plan horizontal de la brosse 210. L'autre bord du tapis 221 est disposé au-dessus du réceptacle.

Les coquillages, suite au déplacement du moyen de récolte 200 et à la rotation de la brosse 210, sont déplacés jusque sur le tapis sans fin 221. Le tapis sans fin 221 permet de les acheminer depuis le bord 221a jusque dans le réceptacle dans lequel ils sont stockés.

Dans une variante de l'invention, non représentée, le moyen de réception 220 peut être composé uniquement d'un réceptacle disposé dans un plan inférieur au plan horizontal de la brosse 210 et prévu pour recevoir les coquillages déplacés par celle-ci.

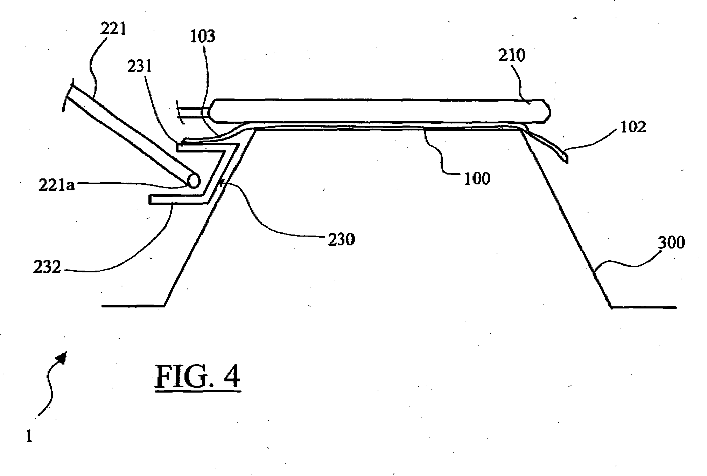

Le moyen de récolte 200 comporte en outre un moyen de protection 230 du moyen de réception 220, visible sur la Fig. 4. Le moyen de protection 230 est situé dans un plan inférieur au plan de la brosse 210. Il présente la forme d'un U dont une branche, la branche 231, est prévue pour s'interposer entre le bord 221 a du tapis sans fin 221 et la brosse 210 et l'autre branche, la branche 232, est disposée sous le bord 221 a du tapis sans fin 221. Ainsi, le moyen de réception 220 vient s'interposer entre les branches 231 et 232 du moyen de protection 230. Le bord 221a du tapis sans fin 221 est protégé dans lé cas où le moyen de protection 230 toucherait le sol.

De plus, le bord 103 de la poche 100 déployée peut reposer sur la branche 231. Les coquillages, déplacés par la brosse 210, peuvent alors glisser le long du bord 103, sur la branche 231 du moyen de protection 230, jusque sur le tapis sans fin 221. Le moyen de protection 230 sert alors de guide pour les coquillages.

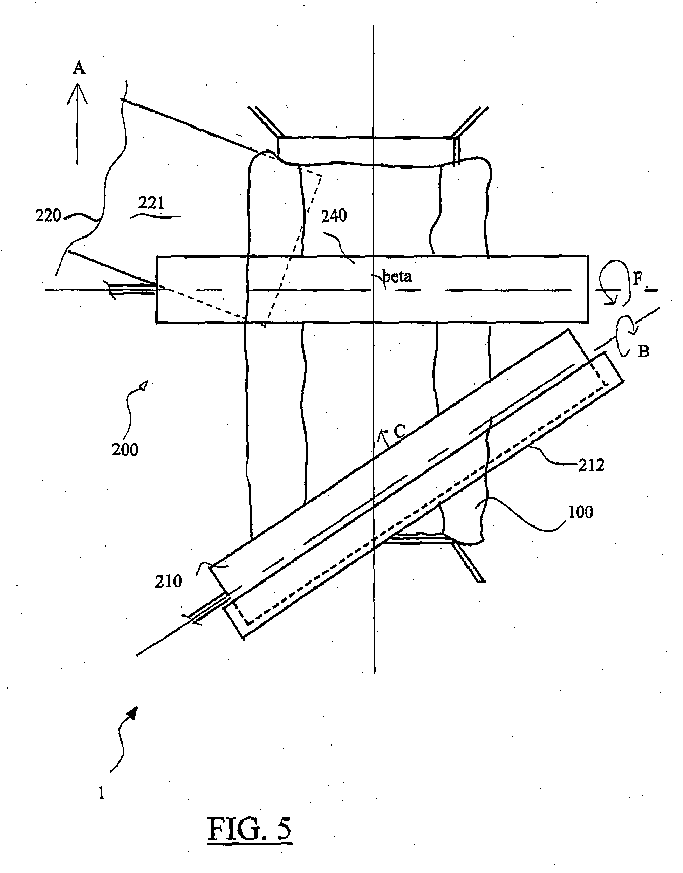

Dans une variante de l'invention représentée sur la Fig. 5, et lorsque les coquillages cultivés sont notamment des moules, le moyen de récolte 200 peut comporter une seconde brosse cylindrique 240 rotative autour de son axe longitudinal dans un sens horaire de manière à provoquer le dégrappage des coquillages. La brosse 240 est disposée en avant de la brosse 210 par rapport à la direction de déplacement du moyen de récolte 200. Elle est rotative autour de son axe longitudinal de telle sorte que les points les plus bas de ladite brosse 240 se déplacent d'arrière en avant par rapport à la direction de déplacement A de la brosse 210, c'est-à-dire dans un sens F contraire au sens de rotation de la brosse 210. L'axe de rotation de la brosse 240 forme un angle β au moins égal à 90° avec la direction de déplacement A de la brosse 210.

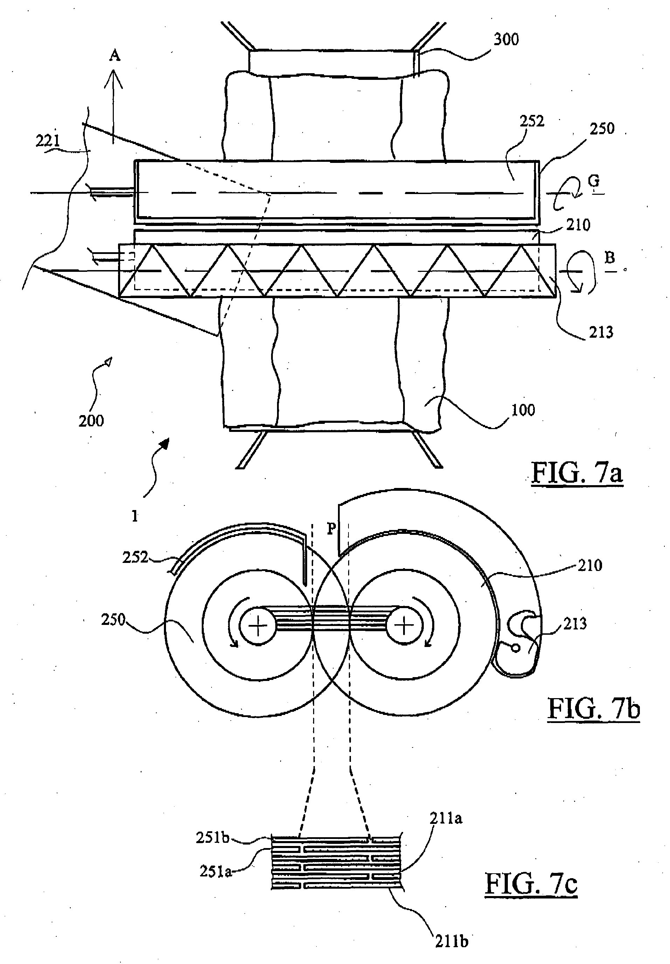

Dans un autre mode de réalisation de l'invention, représenté sur les Figs. 7a et 7b, le moyen de récolte 200 comporte deux brosses, la brosse 210 et une seconde brosse 250. La brosse 250 est disposée en avant de la brosse 210 par rapport à la direction de déplacement A du moyen de récolte 200, parallèle à la brosse 210 et contre celle-ci (Fig. 7a). La brosse 250 est rotative autour de son axe longitudinal de telle sorte que les points les plus bas se déplacent d'avant en arrière par rapport à la direction de déplacement A de la brosse 210, c'est-à-dire, dans un sens (G) contraire au sens de rotation de la brosse 210. Dans ce mode de réalisation, l'axe de rotation de la brosse 210 forme un angle α de 90° avec la direction de déplacement A du moyen de récolte 200.

Les brosses 210 et 250 comportent des fibres 211 et 251, respectivement, implantées de façon parallèle par rapport aux axes longitudinaux respectifs des brosses 210, 250. Les fibres 211, 251 sont de deux sortes, des fibres courtes 211a, 251a et des fibres longues 211b, 251b, qui sont disposées en alternance les unes par rapport aux autres à l'intérieur des rangées (Fig. 7b,c) Les fibres longues 211 b de la brosse 211 viennent s'intercaler entre les fibres longues 251b de la brosse 250 lorsque les brosses 210 et 250 tournent autour de leur axe longitudinal, ce qui a pour conséquence de créer un passage P à l'intérieur duquel les coquillages sont entraînés.

Une membrane 252 empêche les coquillages de passer par-dessus la brosse 250 (Fig. 7b). De ce fait, les coquillages sont entraînés uniquement par-dessus la brosse 210 où une vis sans fin 213 amovible est prévue pour pouvoir les transporter depuis le haut du passage P jusque dans le moyen de réception 220, composé, par exempte, du tapis sans fin 221.

La largeur du passage P peut être modifiée grâce à un décalage de hauteur entre les brosses 210 et 250.

Dans une variante de l'invention, le moyen de production ne comporte pas de vis sans fin 213. Les coquillages sont entraînés par-dessus la brosse 210 et retombent sur la poche 100. Ce mode de réalisation astucieux permet de réaliser un virage des coquillages.

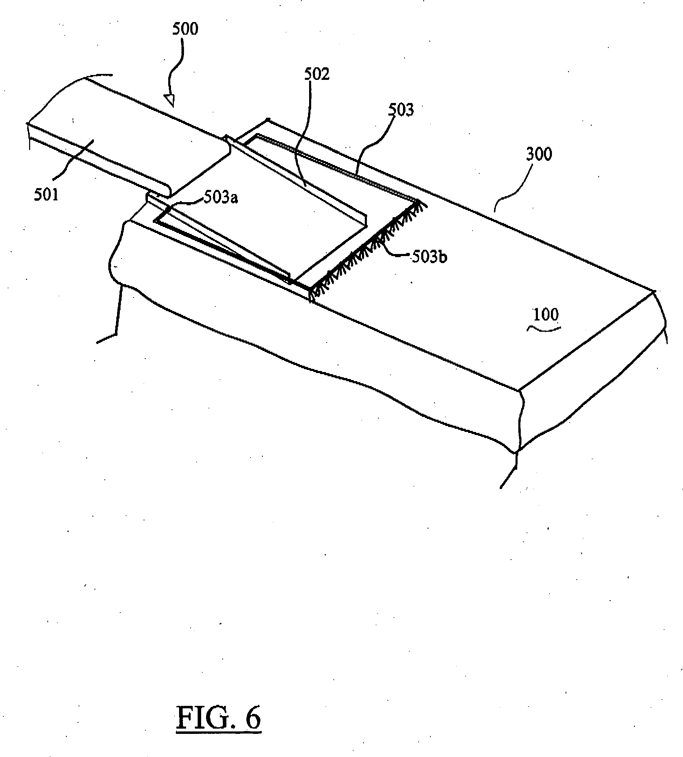

Comme illustré sur la Fig. 6, le moyen de production 1 peut en outre comprendre un moyen de mise en culture 500 qui est prévu pour déposer les coquillages sur la poche 100 lorsque celle-ci est déployée. Le moyen de mise en culture 500 comprend un tapis sans fin 501, un bac 502 et un râteau 503. Le tapis sans fin 501 est prévu pour acheminer les coquillages jusque dans le bac 503. Celui-ci est incliné de manière à ce que les coquillages glissent jusque sur la poche 100, déployée sur la table 300. Le râteau 503 comporte des fibres regroupées en plusieurs touffes 503b réparties sur sa largeur. Il est, de plus, monté libre en rotation autour de son axe 503a. Il permet une bonne répartition des coquillages sur la table 300.

Le moyen de mise en culture 500 peut être relié au châssis d'un véhicule, non représenté sur la Fig. 6.

## Revendications

1. Ensemble (1) de production de coquillages; tels que des moules ou des huîtres, comportant au moins un moyen de culture (400) composé d'au moins une table de culture (300) et d'au moins une poche (100) qui est prévue pour contenir lesdits coquillages et pour être disposée sur ladite table de culture (300), **caractérisé en ce que** ladite poche (100) est composée d'au moins une pièce (101) dont les bords opposés (102, 103) sont joints par un moyen de liaison (104) de manière à former ladite poche (100), ledit moyen de liaison (104) pouvant être actionné de manière à déployer ladite poche (100), et **en ce qu'**il comporte, de plus, un moyen de récolte (200) prévu pour récolter lesdits coquillages contenus dans ladite poche (100) lorsque celle-ci est déployée.

2. Ensemble (1) de production de coquillages selon la revendication 1, **caractérisé en ce que** ledit moyen de liaison (104) est composé d'au moins un crochet (104a) et d'au moins un élastique (104b).

3. Ensemble (1) de production de coquillages, selon l'une des revendications précédentes, **caractérisé en ce que** ladite poche (100), lorsqu'elle est formée, est pourvue d'au moins un peigne (105) comportant au moins une dent (105a) présentant un coude, ledit peigne (105) étant disposé perpendiculairement au plan de ladite poche (100).

4. Ensemble (1) de production de coquillages selon l'une des revendications précédentes, **caractérisé en ce que** ledit moyen de récolte (200) est prévu pour être déplacé dans une direction (A) parallèle à l'axe longitudinal de ladite table (300) et comporte au moins une brosse cylindrique (210), prévue pour être disposée sur ladite table (300), rotative autour de son axe longitudinal dans un sens (B) tel que les points les plus bas sur ladite brosse (210) se déplacent d'arrière en avant par rapport à ladite direction de déplacement (A) de manière à provoquer un déplacement des coquillages, lequel axe forme un angle (α) avec ladite direction de déplacement (A), et un moyen de réception (220) pour coquillages disposé dans un plan inférieur au plan horizontal de ladite brosse (210) en arrière de la partie la plus en arrière de ladite brosse (210) par rapport à la direction (A) et destiné à recevoir lesdits coquillages déplacés par ladite brosse (210).

5. Ensemble (1) de production de coquillages selon la revendication 4, **caractérisé en ce que** ledit angle (α) est tel que ladite brosse (210) est apte à couvrir la totalité de la largeur de ladite table (300) et est préférentiellement compris entre 45° et 90°.

6. Ensemble (1) de production de coquillages selon l'une des revendications 4 à 5, **caractérisé en ce que** ladite brosse (210) comprend plusieurs rangées de fibres implantées de façon hélicoïdale autour de son axe longitudinal de manière à provoquer un déplacement des coquillages le long dudit axe longitudinal.

7. Ensemble (1) de production de coquillages selon l'une des revendications 4 à 6, **caractérisé en ce que** ledit moyen de récolte (200) comporte une brosse (250) qui est rotative autour de son axe longitudinal dans un sens (F) tel que les points les plus bas sur ladite brosse (250) se déplacent d'avant en arrière par rapport à ladite direction de déplacement (A) dudit moyen de récolte (200) et qui est disposée en avant de ladite première brosse cylindrique (210), parallèle à celle-ci et contre celle-ci de manière à ce que les fibres (211, 251) des brosses (210, 251), respectivement, s'intercalent les unes dans les autres pour former un passage (P) à l'intérieur duquel les coquillages sont entraînés lorsque lesdites brosses (210, 250) sont entraînées en rotation.

8. Ensemble (1) de production de coquillages selon la revendication 7, **caractérisé en ce que** ledit moyen de récolte (200) comporte une vis sans fin (213) amovible prévue pour acheminer les coquillages depuis ledit passage (P) jusque dans ledit moyen de réception (220).

9. Ensemble (1) de production de coquillages selon l'une des revendications 4 à 8, **caractérisé en ce que** ledit moyen de réception (220) est composé d'un tapis sans fin (221) monté sur deux rouleaux entraînés en rotation par un moteur ainsi que d'un réceptacle, un bord (221a) dudit tapis sans fin (221) étant disposé au-dessus dudit réceptacle et l'autre bord dudit tapis (221) étant disposé dans un plan inférieur au plan horizontal de ladite brosse (210).

10. Ensemble (1) de production de coquillages selon l'une des revendications 4 à 5 et 9 à 10, **caractérisé en ce que** ledit moyen de récolte (200) comporte en outre une seconde brosse cylindrique (240) qui est rotative autour de son axe longitudinal dans un sens (F) tel que les points les plus bas sur ladite brosse (240) se déplacent d'avant en arrière par rapport à ladite direction de déplacement (A) dudit moyen de récolte (200) de manière à provoquer un dégrappage des coquillages et qui est disposée en avant de ladite première brosse cylindrique (210).

11. Ensemble (1) de production de coquillages selon la revendication 11, **caractérisé en ce que** l'axe longitudinal de ladite brosse cylindrique (240) forme un angle β avec ladite direction de déplacement (A) dudit moyen de récolte (200) au moins égal à 90°.

12. Ensemble (1) de production de coquillages selon la revendication 4 à 13, **caractérisé en ce que** ledit moyen de récolte (200) comporte une paroi de protection (212) de ladite brosse cylindrique (210) prévue pour empêcher les coquillages d'être entraînés par la rotation de la brosse (210) au-dessus de celle-ci.

13. Ensemble (1) de production de coquillages selon l'une des revendications précédentes, **caractérisé en ce qu'**il comporte, de plus, un moyen de mise en culture (500) composé d'un tapis sans fin (501) au bout duquel s'étend un bac (502) prévu pour être disposé au-dessus de la table (300) et un râteau (503) prévu pour répartir les coquillages sur la poche (100) lorsque celle-ci est déployée.

14. Moyen de récolte (200), **caractérisé en ce qu'**il est prévu pour être déplacé dans une direction (A) parallèle à l'axe longitudinal de ladite table (300) et comporte au moins une brosse cylindrique (210), prévue pour être disposée sur ladite table (300), rotative autour de son axe longitudinal dans un sens (B) tel que les points les plus bas sur ladite brosse (210) se déplacent d'arrière en avant par rapport à ladite direction de déplacement (A) de manière à provoquer un déplacement des coquillages, lequel axe forme un angle (α) avec ladite direction de déplacement (A), et un moyen de réception (220) pour coquillages disposé dans un plan inférieur au plan horizontal de ladite brosse (210) en arrière de la partie la plus en arrière de ladite brosse (210) par rapport à la direction (A) et destiné à recevoir lesdits coquillages déplacés par ladite brosse (210).

15. Moyen de récolte (200) selon la revendication 15, **caractérisé en ce que** ledit angle (α) est tel que ladite brosse (210) est apte à couvrir la totalité de la largeur de ladite table (300) et est préférentiellement compris entre 45° et 90°.

16. Moyen de récolte (200) selon l'une des revendications 15 à 16, **caractérisé en ce qu'**il comporte une brosse (250) qui est rotative autour de son axe longitudinal dans un sens (G) tel que les points les plus bas sur ladite brosse (250) se déplacent d'avant en arrière par rapport à ladite direction de déplacement (A) dudit moyen de récolte (200) et qui est disposée en avant de ladite première brosse cylindrique (210), parallèle à celle-ci et contre celle-ci de manière à ce que les fibres (211, 251) des brosses (210, 251), respectivement, s'intercalent les unes dans les autres pour former un passage (P) à l'intérieur duquel les coquillages sont entraînés lorsque lesdites brosses (210,250) sont entraînées en rotation.

17. Moyen de récolte (200) selon la revendication 17, **caractérisé en ce qu'**il comporte une vis sans fin (213) prévue pour acheminer les coquillages depuis ledit passage (P) jusque dans ledit moyen de réception (220).

18. Moyen de récolte (200) selon l'une des revendications 15 à 18, **caractérisé en ce que** ledit moyen de réception (220) est composé d'un tapis sans fin (221) monté sur deux rouleaux entraînés en rotation par un moteur ainsi que d'un réceptacle, un bord (221a) dudit tapis sans fin (221) étant disposé au-dessus dudit réceptacle et l'autre bord dudit tapis (221) étant disposé dans un plan inférieur au plan horizontal de ladite brosse (210).

19. Moyen de récolte (200) selon l'une des revendications 15 à 16 et 19, **caractérisé en ce qu'**il comporte en outre une seconde brosse cylindrique (240) qui est rotative autour de son axe longitudinal dans un sens (F) tel que les points les plus bas sur ladite brosse (240) se déplacent d'avant en arrière par rapport à ladite direction de déplacement (A) dudit moyen de récolte (200) de manière à provoquer un dégrappage des coquillages et qui est disposée en avant de ladite première brosse cylindrique (210).

20. Moyen de récolte (200) selon l'une des revendications 15 à 20, **caractérisé en ce qu'**il comporte une paroi de protection (212) de ladite brosse cylindrique (210) prévue pour empêcher les coquillages d'être entraînés par la rotation de la brosse (210) au-dessus de celle-ci.
